# FASCICULE DE BREVET EUROPEEN

(11) **EP 2 461 442 B1**
(45) Date de publication et mention de la délivrance du brevet: **05.03.2014**
(21) Numéro de dépôt: 11354045.4
(22) Date de dépôt: 13.09.2011
(51) Int. Cl.: H02G 3/00

(54) **Ensemble de commande d'effecteurs et rpocede de commande dudit ensemble**
Steuergruppe für Steuerzeichen und Verfahren zum Steuern der besagten Gruppe
Unit for controlling effectors and method for controlling said unit

(30) Priorité: 02.12.2010 FR 1004697
(43) Date de publication de la demande: 06.06.2012
(73) Titulaire: Schneider Electric Industries SAS, 92500 Rueil-Malmaison (FR)
(72) Inventeur: Vidalenche Gilles, 38050 Grenoble Cedex 09 (FR); Cartoux Bernard, 38050 Grenoble Cedex 09 (FR)
(74) Mandataire: Picard, Laurent

(56) Documents cités:
- EP-A1- 0 495 322
- EP-A1- 2 211 435

## Description

### DOMAINE TECHNIQUE DE L'INVENTION

L'invention est relative à un ensemble de commande destiné à commander des effecteurs de puissance et comportant au moins un récepteur de commande de premier type à très basse tension connectable à une interface de commande via des moyens de communication très basse tension de type BUS. Ledit au moins un récepteur de commande de premier type à très basse tension comprendt des moyens de commande de type tout ou rien destinés à générer des commandes impulsionnelles. Ladite interface de commande comprend un bloc passif de transformation relié à un bloc de contrôle actif par des liaisons électriques très basse tension. Ledit bloc passif comprend au moins un premier port d'entrée destiné à être relié au récepteur de commande de premier type à très basse tension, au moins deux sorties interconnectées avec ledit au moins premier port d'entrée et reliées au bloc de contrôle actif via les liaisons électriques très basse tension. Le bloc comprend aussi un bus interne commun reliant une première entrée de chaque premier port d'entrée à une sortie commune du bloc passif de transformation et comprend au moins un premier bus interne d'information reliant une seconde entrée de chaque premier port d'entrée à une sortie dédiée du bloc passif de transformation. Toutes les entrées des premiers ports d'entrée sont destinées à une même commande étant reliés à un même premier bus interne d'information. Une commande implusionnelle met en court-circuit le bus interne commun et un bus interne d'information.Ledit bloc de contrôle actif comprend des moyens de traitement destinés à transformer des ordres de commande reçus via les liaisons électriques très basse tension en ordre de commande de puissance pour commander de manière dédiée au moins un effecteur de puissance, la transformation des ordres de commande très basse tension en ordre de commande de puissance étant réalisée en fonction de scénarios programmés dans ledit bloc.

L'invention est aussi relative à un procédé de commande d'effecteur de puissance mettant en oeuvre ledit ensemble de commande d'effecteurs.

### ETAT DE LA TECHNIQUE ANTERIEURE

Il est connu des dispositifs de commande autorisant le pilotage d'un ou plusieurs effecteurs de forte puissance placés à distance dans un espace d'intervention. Il est aussi connu des dispositifs de commande autorisant le pilotage d'un ou plusieurs modes de fonctionnement d'un même effecteur. Les dispositifs de commande peuvent comporter des interfaces commande très basse tension. On entend par très basse tension des tensions alternatives inférieures à 50 Volts ou des tensions continues inférieures à 120 Volts. Dans certains cas, la norme limite la valeur de la très basse tension à des valeurs inférieures à 50v en courant alternatif ou 120V en courant continu lisse. Ces valeurs sont définies dans la norme française NF C 15-100. Ce type de dispositif privilégiant la sécurité de l'utilisateur peut être employé dans des applications liées au résidentiel, ou liées à des établissements publics tels que des écoles, garderies, hôpitaux, hôtel ...

L'installation et la mise en oeuvre de dispositifs de commande comprenant plusieurs interfaces multi-commandes dans l'espace d'intervention est complexe à réaliser pour un installateur. En outre, la maintenance peut être complexe et difficile à réaliser. A titre d'exemple, pour une installation électrique comprenant des luminaires, des moyens occultant ou tout autre récepteur électrique fonctionnant en tout ou rien, les interfaces de commande de ces effecteurs nécessitent généralement un interrupteur au niveau de l'interface de commande et un câble comportant une paire de fils reliant ladite interface à l'effecteur. La complexité provient du nombre de câbles à mettre en oeuvre, du nombre d'interconnexion à réaliser entre ces câbles et des risques important d'erreur au câblage. En effet, les câbles ainsi installés sont interconnectés dans des boites de dérivation ou des armoires électriques afin de réaliser des circuits de type alimentation directe avec un point de commande, des circuits de type va et vient avec deux points de commande ou de circuit de type télérupteur avec plusieurs points de commande. En outre, les câbles sont interconnectés dans des boites de dérivation ou des armoires électriques afin de réaliser aussi des circuits avec plusieurs points de commandes de type permutateurs ou télérupteur.

Dans tous les cas cités ci-dessus, il n'est possible de réaliser qu'une fonction de commande par câble et donc de ne commander qu'un seul effecteur. En outre, il est nécessaire pour l'installateur de câbler les phases et les neutres des câbles de commande et d'alimentation des effecteurs directement sur les interfaces de commandes. Une erreur de câblage peut provoquer dans le meilleur des cas un non-fonctionnement de l'effecteur ou dans le pire des cas un court circuit. Enfin, dans les installations dite « directes » ou « va et vient », la section du câble utilisé doit être apte à supporter un courant nominal de fonctionnement de l'effecteur commandé. Ce dimensionnement des câbles électriques augmente le cout du matériel. L'utilisation de télérupteurs impose que les câbles électriques soient capables de supporter la tension du réseau.

Pour résoudre certains problèmes cités ci-dessus, l'utilisation de bus de commande peut être préconisée. Les bus de commande peuvent être de type filaire ou de type radio. Dans une installation réalisée avec un bus de commande filaire ou radio, chaque commande doit être appairée spécifiquement avec un effecteur. Cette procédure d'appairage nécessite l'utilisation de matériels spécifiques tels qu'un contrôleur et/ou une interface de programmation. En outre, ladite procédure, parfois complexe doit être scrupuleusement respectée pour un bon fonctionnement de l'installation. La maintenance de l'installation nécessite l'intervention d'agent technique spécialisé possédant une bonne connaissance du fonctionnement du contrôleur et de l'interface de programmation. Enfin, en cas d'extension de l'installation pour ajouter de nouveaux effecteurs, une nouvelle procédure d'appairage peut être nécessaire.

Pour simplifier la procédure d'appairage, une solution décrite dans la demande de brevet de la demanderesse FR2941570/EP2211435 permet de dupliquer les points de commande d'un même effecteur de puissance sans intervenir sur la programmation de moyens de traitement. Cependant, avec ce type interface de commande impulsionnelle, l'utilisateur ne peut pas avoir connaissance de la dernière commande réalisée. En effet, le bouton reprend sa position de repos dès qu'il n'est plus activé. Ainsi, dans le cas d'une commande impulsionnelle, il est nécessaire d'ajouter un circuit de retour d'information pour informer l'utilisateur du dernier état activé. En pratique, l'utilisateur appuie une fois et un signal de retour tel qu'un voyant s'allume pour lui indiquer qu'il a fermé le circuit. S'il appuie une nouvelle fois le signal retour change d'état et voyant s'éteint ou change de couleur. La gestion de ce circuit retour est compliquée à mettre en oeuvre. Par ailleurs, dans le cas d'une interface avec plusieurs commandes impulsionnelles, l'utilisateur ne connait pas quelle est la dernière commande qui a été activée.

Des solutions telles que décrites dans la demande EP 0 495 322 proposent des systèmes complexes où chaque appareil comporte un circuit de commande propre associé à une carte de fonction.

Les commandes impulsionnelles ne peuvent pas être remplacées par des interrupteurs bistables, car il suffit alors qu'un seul interrupteur soit ouvert ou fermé suivant le mode parallèle ou série pour que le fonctionnement des autres interrupteurs non actifs soit masqué.

### EXPOSE DE L'INVENTION

L'invention vise donc à remédier aux inconvénients de l'état de la technique, de manière à proposer un ensemble de commande d'effecteurs simple et efficace.

L'ensemble de commande d'effecteurs selon l'invention comporte au moins un récepteur de commande de second type à très basse tension connectable à l'interface de commande via des moyens de communication très basse tension de type BUS et comportant des moyens de commande de type tout ou rien destinés à générer des commandes statiques.

Le bloc passif de transformation comprend au moins un second port d'entrée destiné à être relié au récepteur de commande de second type à très basse tension, au moins deux sorties interconnectées avec ledit au moins second port d'entrée sont reliées au bloc de contrôle actif via une liaison électrique très basse tension. Le bloc passif de transformation comprend au moins un second bus interne d'information reliant une entrée de chaque second port d'entrée à une sortie dédiée du bloc passif de transformation. Toutes les entrées des seconds ports d'entrée destinées à une même commande sont reliés à un même bus interne d'information. Le bus interne commun reliant une entrée de tous les ports d'entrée à une sortie commune du bloc passif de transformation, une commande statique mettant en court-circuit le bus interne commun et au moins un second bus interne d'information.

Selon un mode de développement de l'invention, des moyens de traitement du bloc de contrôle actif transforment des ordres de commande très basse tension émis respectivement par les récepteur de commande de premier et de second type suivant un ordre chronologique.

Avantageusement, les ports d'entrée du bloc passif de transformation comportent des moyens de connexion destinés à être reliés à un récepteur de commande de premier ou de second type via des moyens de communication très basse tension de type BUS. Les moyens de commande du récepteur de commande de premier type à très basse tension comportent au moins un interrupteur à deux positions destiné à générer une commande impulsionnelle de type ouvert-fermé.

Selon un mode de développement de l'invention, le récepteur de commande de second type à très basse tension comporte une base et une organe de commande nomade destiné à collaborer avec ladite base ;

De préférence, la base comporte au moins un dipole électrique de commande étant naturellement en position ouverte, un premier pôle étant destiné à être connecté au bus interne commun et un second pôle étant destiné à être connecté à un second bus interne d'information. L'organe de commande nomade est apte à agir sur la fermeture du dipole électrique de commande lorsque la base et l'organde commande nomade sont placés dans une zone d'influence commune.

Selon un mode particulier de réalisation, l'organe de commande nomade comportent des moyens de fermeture autorisant une fermeture du dipole électrique par contact direct entre lesdits moyens et lesdits premiers et second pôles.

Selon un autre mode particulier de réalisation, la base comporte un contact mobile apte à se déplacer entre une position d'ouverture et une position de fermeture du dipôle électrique, le contact entre l'organe de commade nomade et la base entrainant le déplacement du contact mobile de la position d'ouverture vers la position de fermeture.

Avantageusement, le récepteur de commande de second type à très basse tension comporte des moyens magnétiques d'actionnement comportant au moins un aimant positionné dans l'organe de commande nomade, la présence dudit organe dans le zone d'influence de la base entrainant le déplacement du contact mobile de la position d'ouverture à la position de fermeture sous l'effet du champ magnétique de l'aimant.

Avantageusement, les moyens magnétiques d'actionnement comportent un interrupteur de type ampoule REED ou de type MEMS.

Selon un mode de développement de l'invention, la base du récepteur de commande de second type à très basse tension comporte des premiers moyens de connexion destinés à être reliés au second port d'entrée d'un bloc passif de transformation via des moyens de communication très basse tension de type BUS.

Selon un mode de développement de l'invention, la base du récepteur de commande de second type à très basse tension comporte des seconds moyens de connexion reliés au premiers moyens de connexion et étant destinés au branchement série ou parallèle d'au moins une seconde base d'un second récepteur de second type.

De préférence, la base du récepteur de commande de second type à très basse tension comporte au moins deux dipoles électriques de commande.

Avantageusement, l'organe de commande nomade comporte des moyens de fermeture simultanée desdits au moins deux dipoles électriques de commande.

Selon un mode de développement de l'invention, l'organe de commande nomade comporte un boitier ayant plusieurs de faces de contrôle, chaque face de contrôle étant adaptée à coopérer avec la base et comportant ses propres moyens moyens de fermeture.

Le procédé de commande d'effecteur de puissance mettant en oeuvre l'ensemble de commande d'effecteurs tel que défini ci-dessus, consiste à transformer des ordres de commande très basse tension en ordre de commande de puissance en fonction de scénarios programmés dans ledit bloc, procédé et consiste à traiter les ordres de commande très basse tension issue de récepteur de commande de premier type et de récepteur de commande de second type suivant un ordre chronologique, le dernier ordre arrivé annulant et remplaçant le précédent ordre quel que soit le récepteur concerné par l'envoi.

### BREVE DESCRIPTION DES FIGURES

D'autres avantages et caractéristiques ressortiront plus clairement de la description qui va suivre de modes particuliers de réalisation de l'invention, donnés à titre d'exemples non limitatifs, et représentés aux dessins annexés sur lesquels :
la figure 1 représente une vue schématique d'un ensemble de commande d'effecteurs selon un premier mode préférentiel de réalisation de l'invention ;
les figures 2 et 3 représentent respectivement des vues schématiques d'autres modes de développement d'un ensemble de commande d'effecteurs selon la figure 1 ;
la figure 4 représente une vue schématique d'une variante de réalisation d'un ensemble de commande selon les différents modes de réalisation ;
les figure 5A et 5B représentent respectivement une vue schématique d'une première variante d'un dipole électrique d'une base d'un récepteur électrique de second type dans deux positions de fonctionnement ;
les figure 6A et 6B représentent respectivement une vue schématique d'une seconde variante d'un dipole électrique d'une base d'un récepteur électrique de second type dans deux positions de fonctionnement ;
les figure 7A et 7B représentent respectivement une vue schématique d'une troisième variante d'une dipole électrique d'une base d'un récepteur électrique de second type dans deux positions de fonctionnement ;
la figure 8 représente un chronogramme de fonctionnement d'un procédé de commande d'effecteurs de puissance selon un mode de réalisation de l'invention ;
la figure 9 représente un chronogramme de fonctionnement d'un procédé de commande d'effecteurs de puissance selon un autre mode de réalisation de l'invention.

### DESCRIPTION DETAILLEE D'UN MODE DE REALISATION

L'interface de commande d'effecteurs 1 selon un mode de réalisation de l'invention est destinée à commander des effecteurs de puissance 100 par des récepteurs de commande de premier et second type 10A, 10B à très basse tension.

A titre d'exemple, si l'interface de commande 1 selon l'invention est dédiée à une chambre d'hotel ou d'hopital, les effecteurs de puissance 100 peuvent être des éclairages et/ou des moyens de chauffage et/ou des moyens occultant tels que des volets électriques.

Les effecteurs de puissance 100 peuvent fonctionner sous des tensions alternatives ou continues.

Lesdits récepteurs de commande de premier et second type 10A, 10B à très basse puissance sont destinés à être reliés à ladite interface par des moyens de communication très basse tension 11 de type BUS. A titre d'exemple de réaliation, les moyens de communication très basse tension 11 de type BUS comportent un cable réseau de type câble informatique à N paires de conducteurs. A titre d'exemple de réalisation non limitatif, les moyens de communication très basse tension 11 de type BUS comportent un cable réseau à quatre paires de conducteurs destinés à se connecter via des prises de type RJ45. L'utilisation d'autres câbles réseau peut être envisagée notamment des câbles comportant seize paires de conducteurs destinés à se connecter via des prises de type Sub D 32 broches.

L'interface de commande 1 comprend un bloc de contrôle actif 3 destiné à transformer un ordre de commande très basse tension émis par au moins un récepteur de commande très basse tension 10A, 10B en une commande électrique destinée à au moins un effecteur de puissance 100.

L'interface de commande comprend un bloc passif de transformation 2 relié au bloc de contrôle actif 3 par des liaisons électriques très basse tension 4.

Pour de type de d'application, on entend par très basse tension un circuit électrique conforme à la définition de la norme française NF C 15-100.

Le bloc passif de transformation 2 comprend au moins un premier port d'entrée 5A, 5B, 5C destiné à être relié à un récepteur de commande très basse tension de premier type 10A via les moyens de communication 11 de type BUS. Le bloc passif de transformation 2 comprend en outre au moins un second port d'entrée 55A destiné à être relié à un récepteur de commande très basse tension de second type 10B via les moyens de communication 11 de type BUS.

De préférence et à titre d'exemple de réalisation, les premiers et les seconds ports d'entrée 5A, 5B, 5C, 55A du bloc passif de transformation 2 comportent des moyens de connexion destinés à être respectivement reliés à un récepteur de commande très basse tension de premier type 10A et de second type 10B via des moyens de communication très basse tension 11 de type bus. Selon un mode de développement de l'invention, les moyens de connexion comporte une prise débrochable. Avantageusement, la prise débrochable est de type RJ 45. Ce type de connectique a l'avantage d'être très répandue et d'être très fiable en terme de connexion électrique. D'autres prises débrochables peuvent bien sur être envisagées. L'utilisation de prise débrochable permet une installation ou le remplacement rapide d'un nouveau moyen de communication très basse tension 11 de type bus à l'interface de commande d'effecteurs 1. En outre, les récepteurs de commande très basse tension de premier et second type 10A, 10B sont destiné à être connecté à l'interface de commande 1 d'effecteurs telle que décrite ci-dessus. Lesdits récepteurs de commande comportent un premier port de connexion 15, 155 destiné à être relié à un des ports d'entrée 5A, 5B, 5C, 55A du bloc passif de transformation 2 de l'interface via des moyens de communication très basse tension 11 de type bus.

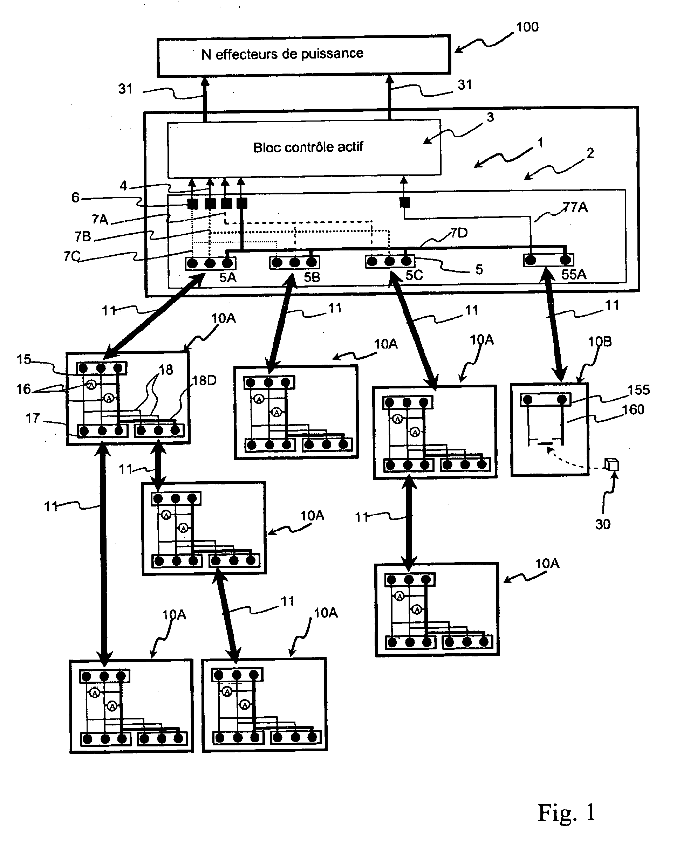

Comme représenté sur la figure 1, à titre d'exemple de réalisation, le bloc passif de transformation 2 comporte trois premiers ports d'entrée 5A, 5B, 5C et comporte un second port d'entrée 55A,.

Comme représenté sur la figure 1, le bloc passif de transformation 2 comprend au moins deux sorties 6 interconnectées avec les ports d'entrée 5A, 5B, 5C, 55A. Les sorties 6 du bloc passif de transformation 2 sont aussi reliées au bloc de contrôle actif 3 via les liaisons électriques basse tension 4.

Le bloc de commande passive 2 comporte des moyens internes de connexion permettant un chainage entre chacune des entrées des ports d'entrée 5A, 5B, 5C, 55A destinées à la commande d'une même fonction. Chaque chainage autorise la mise en connexion électrique d'au moins une entrée avec une seule liaison électrique très basse tension 4.

Comme représenté sur la figure 1, chaque premier port d'entrée 5A, 5B, 5C du bloc passif de transformation 2 comporte une première entrée reliée à un premier bus interne commun 7D et au moins une seconde entrée reliée à un premier bus interne d'information 7A, 7B, 7C.

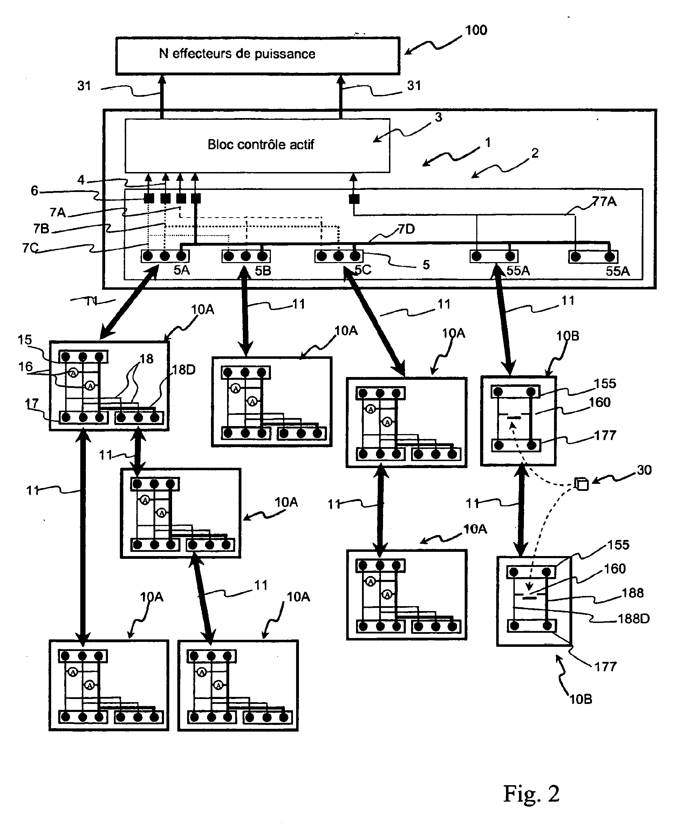

Selon un mode particulier de réalisation tel que représenté sur la figure 2, le bloc passif de transformation 2 peut comporter deux second ports d'entrée 55A.

Chaque second port d'entrée 55A du bloc passif de transformation 2 comporte une première entrée reliée au bus interne commun 7D et au moins une seconde entrée reliée à un second bus interne d'information 77A, 77B. Ledit second bus interne d'information 77A, 77B relie une entrée de chaque second port d'entrée 55A à une sortie 6 dédiée du bloc passif de transformation 2, toutes les entrées des seconds ports d'entrée 55A destinées à une même commande étant reliés à un même second bus interne d'information 77A, 77B.

Selon un mode particulier de réalisation non représenté, un second bus interne d'information 77A peut être connecté à un premier bus interne d'information 7A. Une information transitant par ledit second bus d'information 77A pourrait alors masquer une commande transitant par ledit premier bus d'information 7A.

Le bus interne commun 7D du bloc passif de transformation 2 relie une entrée de tous les ports d'entrée 5A, 5B, 5C, 55A à une sortie 6 commune dudit bloc passif.

A titre d'exemple de réalisation, ce chainage est réalisé grâce une carte de circuit imprimé. Chaque bus interne commun ou d'information est matérialisé par une piste électrique du circuit. Comme représenté sur la figure 1, selon ce mode de réalisation de l'invention, chaque premier port d'entrée 5A, 5B 5C est relié à trois premiers bus interne d'information 7A, 7B, 7C.

Une première sortie 6 du bloc passif de transformation 2 est interconnectée d'une part avec tous les bus internes communs 7D et d'autre part au bloc de contrôle actif 3 via une première liaison électrique très basse tension 4.

Au moins un seconde sortie 6 du bloc passif de transformation 2 est interconnectée d'une part avec au moins un bus interne d'information 7A, 7B, 7C, 77A, 77B et d'autre part au bloc de contrôle actif 3 via au moins une seconde liaison électrique très basse tension 4.

Le récepteur de commande très basse tension de premier type 10A comporte des moyens de commande 16 de type tout ou rien. Lesdits moyens de commande 16 génèrent une commande implusionnelle mettant en court-circuit le bus interne commun 7D et un premier bus interne d'information 7A, 7B, 7C.

Le premier port de connexion 15 d'un récepteur de commande très basse tension de premier type 10A comporte une première sortie reliée à un premier bus interne commun 18D et au moins une seconde sortie reliée à un bus interne d'information 18. A titre d'exemple de réalisation, ce chainage est réalisé grâce une carte de circuit imprimée. Chaque bus interne commun ou d'information 18, 18D est matérialisé par une piste électrique du circuit.

Le premier bus interne commun 18D d'un récepteur de commande très basse tension de premier type 10A est destiné à être relié au bus interne commun 7D du bloc passif de transformation 2. Chaque bus interne d'information 18 d'un récepteur de commande très basse tension de premier type 10A est destiné à être relié à un des premiers bus internes d'information 7A, 7B, 7C du bloc passif de transformation 2.

A titre d'exemple, les moyens de commande 16 comportent au moins un interrupteur à deux positions destiné à générer une commande impulsionnelle de type ouvert - fermé. Chacun des au moins deux interrupteurs est destiné à mettre en court-circuit le bus interne commun 18D et un des bus internes d'information 18.

Ledit premier port de connexion de connexion 15 comprend de préférence une prise débrochable. A titre d'exemple de réalisation la prise débrochable est de type RJ 45. Selon un mode particulier de développement de l'invention, chaque récepteur de commande très basse tension de premier type 10A est relié à l'interface de commande 1 via un câble réseau raccordé à chacune de ces extrémités à une prise réseau de type RJ 45.

Une commande impulsionnelle émise par les moyens de commande 16 est transmise à un premier port d'entrée 5A, 5B, 5C du bloc passif de transformation 2 via des moyens de communication très basse tension 11 de type BUS.

Selon un mode particulier de l'invention, les récepteurs de commande très basse tension de premier type 10A comportent au moins un second port de connexion 17 relié au premier port de connexion 15. A titre d'exemple de réalisation, ledit au moins un second moyen de connexion 17 est relié au premier port de connexion via des pistes électriques du circuit. Ledit au moins un second port de connexion 17 comprennent de préférence une prise débrochable. A titre d'exemple de réalisation, la prise débrochable est de type RJ 45.

Comme représenté sur les figures 1 à 4, selon un mode particulier de réalisation de l'invention, les récepteurs de commande très basse tension de premier type 10A comportent deux seconds ports de connexion 17 destinés au branchement série ou parallèle d'au moins un second récepteur de commande très basse tension de premier type 10A.

Ledit au moins second récepteur de commande très basse tension de premier type 10A est destiné à générer les mêmes commandes impulsionnelles de type tout ou rien que le premier récepteur de commande très basse tension de premier type 10A auquel il est connecté. En outre, le nombre de récepteur de commande très basse tension de premier type 10A connectés les uns aux autres n'est pas limité. Cependant, selon l'exemple de réalisation, tous les premiers interrupteurs de tous les récepteurs de commande très basse tension de premier type 10A connectés à une même chaine sont destinés à l'actionnement d'un même effecteur. Tous les seconds interrupteurs de tous les récepteurs de commande très basse tension de premier type 10A connectés à une même chaine sont destinés à l'actionnement d'un même effecteur différent du précédent

Selon un mode préférentiel de réalisation de l'ensemble de commande selon l'invention, ledit au moins un récepteur de commande de second type 10B comporte des moyens de commande 160 de type tout ou rien. Lesdits moyens de commande 160 génèrent des commandes statiques mettant en court-circuit le bus interne commun 7D et un second bus interne d'information 77A, 77B. A titre d'exemple, une commande statique de type tout ou rien peut être une commande d'ouverture et de fermeture d'un éclairage.

On entend par commande statique une commande apte à prendre deux niveaux d'action (tout ou rien) et à rester dans le niveau d'action établi tant qu'une nouvelle commande n'est pas envoyée. Autrement dit, une dernière commande annule et remplace la précédente. Contrairement à une commande de type impussionnelle, on n'observe pas un fonctionnement à bascule où une 1^{ère} impulsion allume par exemple une lampe, et une 2^{ème} impulsion éteint ladite lampe, ce cycle de commande étant sans fin.

Le premier port de connexion 155 d'un récepteur de commande très basse tension de premier type 10A comporte une première sortie reliée à un premier bus interne commun 188D et au moins une seconde sortie reliée à un bus interne d'information 188. A titre d'exemple de réalisation, ce chainage est réalisé grâce une carte de circuit imprimée. Chaque bus interne commun ou d'information 188, 188D est matérialisé par une piste électrique du circuit.

Le premier bus interne commun 188D d'un récepteur de commande tr de second type 10B est destiné à être relié au bus interne commun 7D du bloc passif de transformation 2. Chaque bus interne d'information 188 d'un récepteur de commande de second type 10B est destiné à être relié à un des seconds bus internes d'information 77A, 77B du bloc passif de transformation 2.

A titre d'exemple, les moyens de commande 160 comportent au moins un interrupteur à deux positions destiné à générer une commande statique de type ouvert - fermé. Chaque interrupteur est destiné à mettre en court-circuit le bus interne commun 7D et un des bus internes d'information 77A, 77B.

Ledit premier port de connexion de connexion 155 comprend de préférence une prise débrochable. A titre d'exemple de réalisation la prise débrochable est de type RJ 45. Selon un mode particulier de développement de l'invention, chaque récepteur de commande de second type 10B est relié à l'interface de commande 1 via un câble réseau raccordé à chacune de ces extrémités à une prise réseau de type RJ 45.

Une commande statique émise par les moyens de commande 160 est transmise à un second port d'entrée 55A du bloc passif de transformation 2 via des moyens de communication très basse tension 11 de type BUS.

Selon un mode particulier de l'invention, les récepteurs de commande très de second type 10B comportent au moins un second port de connexion 177 relié au premier port de connexion 155. A titre d'exemple de réalisation, ledit au moins un second moyen de connexion 17 est relié au premier port de connexion via des pistes électriques du circuit. Ledit au moins un second port de connexion 177 comprennent de préférence une prise débrochable. A titre d'exemple de réalisation, la prise débrochable est de type RJ 45.

Comme représenté sur les figures 2 à 4, les seconds ports de connexion 177 sont destinés au branchement série ou parallèle d'au moins un second récepteur de commande très basse tension de second type 10B.

Ledit au moins second récepteur de commande très basse tension de second type 10B est destiné à générer les mêmes commandes statiques de type tout ou rien que le premier récepteur de commande de second type 10B auquel il est connecté. En outre, le nombre de récepteur de commande de second type 10B connectés les uns aux autres n'est pas limité.

Le bloc de contrôle actif 3 comprenant au moins deux sorties forte puissance 31 destinées à commander des effecteurs de puissance 100. Ledit bloc de contrôle actif comprend des moyens de traitement destinés à transformer des ordres de commande très basse tension transmis par les liaisons électriques très basse tension 4 en ordre de commande de puissance pour commander de manière dédiée au moins un effecteur de puissance 100. Les moyens de traitement peuvent comporter de préférence un microcontroleur ou un microprocesseur. La transformation des ordres de commande très basse puissance en ordre de commande de puissance est réalisée en fonction de scénarios programmés dans ledit module actif.

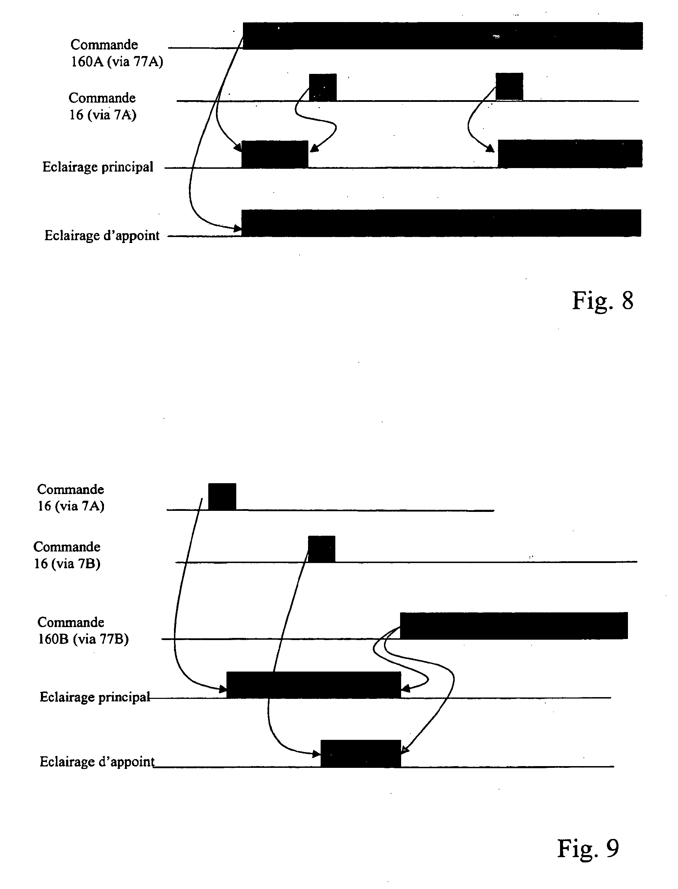

Les moyens de traitement du bloc de contrôle actif 3 transforment des ordres de commande très basse tension émis respectivement par les récepteur de commande de premier et de second type 10A, 10B suivant un ordre chronologique. Ainsi, comme représenté sur les figures 8 ou 9, un ordre de commande émis par un récepteur de commande de premier ou de second type sera annulé et remplacé par un nouvel ordre de commande émis par un récepteur de commande de premier ou de second type. Autrement dit, il n'y a pas de hierarchie entre les ordres de commande des recepteurs de premier type et les recepteurs de second type.

Selon un mode préférentiel de développement de l'invention, le récepteur de commande de second type à très basse tension 10B comporte une base 40 et un organe de commande nomade 30 destiné à collaborer avec ladite base. La base 40 comporte au moins un dipôle électrique de commande étant naturellement en position ouverte, un premier pôle 41 étant destiné à être connecté au bus interne commun 7D et un second pôle 42 étant destiné à être connecté à un second bus interne d'information 77A, 77B.

L'organe de commande nomade 30 est apte à agir sur la fermeture du dipole électrique de commande lorsque la base 40 et ledit organe de commande nomade sont placés dans une zone d'influence commune.

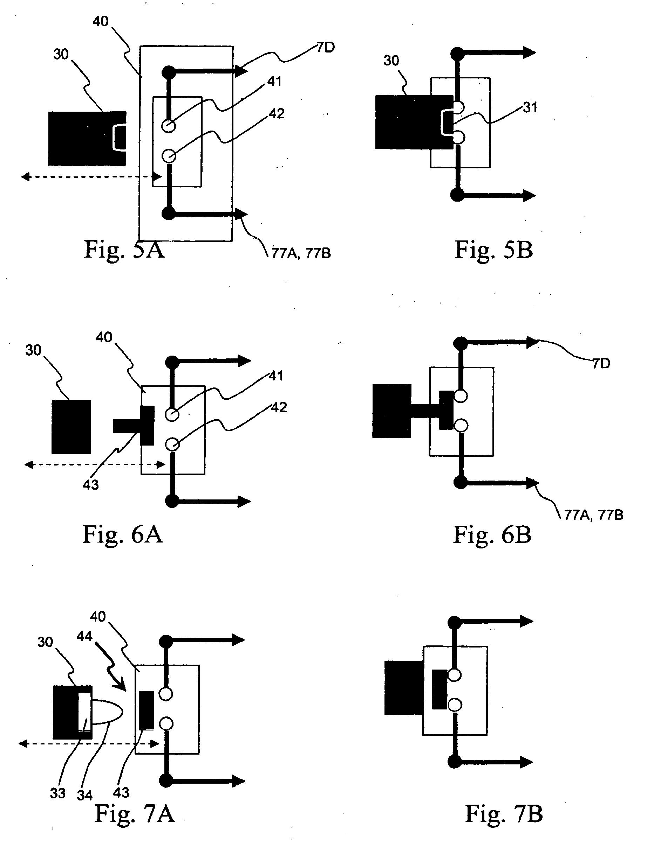

Selon un premier mode particulier de réalisation tel que représenté sur les figures 5a et 5B, l'organe de commande nomade 30 comportent des moyens de fermeture autorisant une fermeture du dipole électrique par contact direct entre lesdits moyens et lesdits premiers et second pôles. A titre d'exemple de réalisation, le positionnement dans la zone d'influence commune de l'organe de commande nomade 30 implique un contact direct dudit organe sur la base 40 pour une mise en court-circuit des deux poles électriques 41, 42 par une barrette conductrice 31 placée dans l'organe de commande nomade 30.

Selon un second mode particulier de réalisation tel que représenté sur les figures 6a et 6B, la base comporte un contact mobile 43 apte à se déplacer entre une position d'ouverture et une position de fermeture du dipôle électrique. Au moment du positionnement de l'organe de commande nomade 30 dans une zone d'influence commune, un contact s'établit entre l'organe de commade nomade 30 et le contact mobile 43. Ledit contact mobile 43 est entrainé en déplacement de la position d'ouverture vers la position de fermeture.

Selon un troisième mode particulier de réalisation tel que représenté sur les figures 7a et 7B, le récepteur de commande de second type à très basse tension 10B comporte des moyens magnétiques d'actionnement 44. Les moyens magnétiques d'actionnement 44 comportent au moins un aimant 33 positionné dans l'organe de commande nomade 30. En outre, les moyens magnétiques d'actionnement 44 comportent au moins un contact mobile 43 apte à se déplacer sous l'action d'un champ magnétique. Le contact mobile 43 est positionné dans la base 40. Au moment du positionnement de l'organe de commande nomade 30 dans une zone d'influence commune, le champ magnétique 34 généré par l'aimant 33 de l'organe de commande nomade 30 agit sur les moyens génère une force entrainant le déplacement du contact mobile 43 de la position d'ouverture à la position de fermeture. A titre d'exemple de réalisation, les moyens magnétiques d'actionnement 44 comportent un interrupteur de type ampoule REED. Les moyens magnétiques d'actionnement 44 peuvent aussi comporter un interrupteur de type MEMS.

Selon un mode de réalisation représenté sur les figures 1 à 4, la base 40 du récepteur de commande de second type à très basse tension 10B comporte des premiers moyens de connexion 155 destinés à être reliés au second port d'entrée 55A d'un bloc passif de transformation 2 via des moyens de communication très basse tension 11 de type BUS.

Selon un mode de développement de l'ensemble de commande tel que représenté sur la figure 2, la base 40 du récepteur de commande de second type à très basse tension 10B comporte des seconds moyens de connexion 177 reliés au premiers moyens de connexion 155 et étant destinés au branchement série ou parallèle d'au moins une seconde base d'un second récepteur de second type 10B.

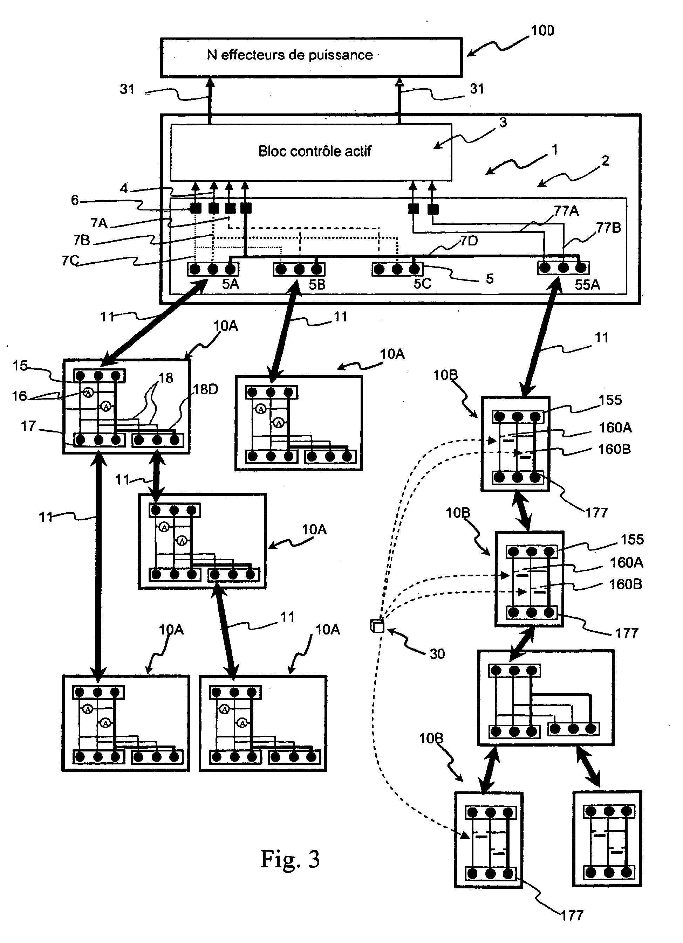

Selon un mode de développement de l'ensemble de commande tel que représenté sur la figure 3, la base du récepteur de commande de second type à très basse tension 10B comporte au moins deux dipole électrique de commande. L'organe de commande nomade 30 comporte alors au moins deux moyens de fermeture desdits au moins deux dipoles électriques de commande.

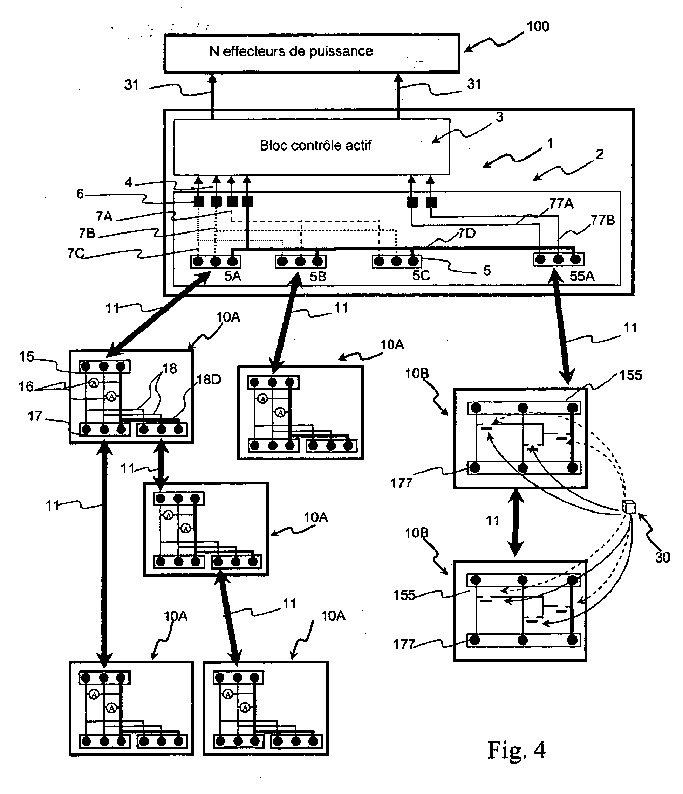

Selon un premier mode particulier de réalisation, tel que représenté sur la figure 4, lesdits au moins deux moyens de fermeture agissent de manière simultanée sur lesdits au moins deux dipoles électriques de commande.

Selon un second mode particulier de réalisation, tel que représenté sur la figure 3, lesdits au moins deux moyens de fermeture agissent de manière indépendante et non concomitamment sur lesdits au moins deux dipoles électriques de commande. Les deux modes particuliers peuvent être utilisés en combinaison ou de manière indépendante.

A titre d'exemple de réalisation, l'organe de commande nomade comporte un boitier ayant plusieurs de faces de contrôle. Le boitier peut avantageusement avoir la forme d'un cube. D'autres formes que celle du cube peuvent être envisagées. Chaque face de contrôle est alors adaptée à coopérer avec la base et comporte ses propres moyens de fermeture. Chaque face du cube comporte au moins un moyen de fermeture propre destiné à activer un dipole connecté à un second bus interne d'information distinct. Si chaque face du cube comporte au moins un moyens de fermeture, la base comporte alors six des moyens de commande 160 distincts.

Selon un mode préférentiel de réalisation, l'association d'un seul organe de commande nomade 30 avec plusieurs bases permet de réaliser une fonction OU exclusif. Comme représenté sur la figure 2, toutes les bases identiques sont reliées via les premiers et seconds moyens de connexion 155, 177 à un second port d'entrée 55A. L'organe de commande nomade 30 permet d'actionner les moyens de commande 160, notamment en fermant d'un dipôle contenu dans n'importe quelle base sur laquelle il est associé. Si l'organe de commande nomade 30 est unique, il est obligatoire de le retirer d'un première base pour le placer sur une seconde base. En pratique, il n'est pas envisageable de fermer simultanément deux dipôles de deux base distinctes.

L'invention est relative à un procédé de commande d'effecteurs de puissance mettant en oeuvre ledit ensemble de commande 1 d'effecteurs défini ci-dessus. Le procédé consiste à transformer des ordres de commande très basse tension en ordre de commande de puissance en fonction de scénarios programmés dans ledit bloc. Selon un mode de développement l'invention, le procédé consiste à traiter les ordres de commande très basse tension issue de récepteur de commande de premier type 10A et de récepteur de commande de second type 10B suivant un ordre chronologique. Ainsi, le dernier ordre arrivé annulant et remplaçant le précédent ordre quel que soit le récepteur concerné par l'envoi.

A titre d'exemple de programmation et d'activation du procédé selon l'invention, un scénario consisterait à générer un ordre de commande de puissance pour l'éclairage principal d'une pièce pour toute commande impulsionnelle très basse puissance issue et véhiculée par un premier bus interne d'information référencé sur le numéro 7A.

Toujours à titre d'exemple de programmation et d'activation, le scénario consisterait à générer un ordre de commande de puissance pour l'éclairage d'appoint d'une pièce pour toute commande impulsionnelle très basse puissance issue et véhiculée par un premier bus interne d'information référencé sur le numéro 7B.

Enfin, un scénario consisterait à générer un ordre de commande de puissance d'ouverture et/ou de fermeture de moyens occultant pour toute commande impulsionnelle très basse puissance issue et véhiculée par un premier bus interne d'information référencé sur le numéro 7C.

Comme représenté sur la figure 3, tout récepteur de commande de premier type 10A connecté au premier port d'entrée 5A, ne pourra commander que l'éclairage d'appoint et l'ouverture/fermeture de moyens occultant via respectivement les premiers bus d'information 7B et 7C. Autrement dit, comme représenté sur la figure 2, le branchement d'un récepteur de commande très basse tension de premier type 10A sur le premier port d'entrée 5A implique que l'actionnement d'un premier interrupteur 16 dudit récepteur entraine l'ouverture où l'extinction de l'éclairage d'appoint et implique que l'actionnement du second interrupteur 16 entraine la commande d'ouverture/fermeture de moyens occultant. En effet, la mise en court-circuit du bus interne commun 18D et d'un premier bus interne d'information 18 via le premier interrupteur 16 entraine la mise en court-circuit le premier bus interne d'information référencé sur le numéro 7B et le bus commun interne 7D. Compte tenu du scénario pré-établi un ordre de commande de puissance de l'éclairage d'appoint est alors généré. La mise en court-circuit du bus interne commun 18D et un d'un premier bus interne d'information 18 via le second interrupteur entraine la mise en court-circuit le premier bus interne d'information référencé sur le numéro 7C et le bus commun interne 7D. Compte tenu du scénario pré-établi un ordre de commande de puissance d'ouverture/fermeture d'occultant est alors généré.

Tout récepteur de commande très basse tension de premier type 10A connecté à un second premier port d'entrée 5B, ne pourra commander que l'éclairage principal et l'ouverture/fermeture de moyens occultant via respectivement les premiers bus d'information 7A et 7C. Autrement dit, comme représenté sur la figure 3, Le branchement d'un second récepteur de commande très basse tension de premier type 10A sur le second port d'entrée 5B implique que l'actionnement d'un premier interrupteur dudit récepteur entraine la commande d'éclairage principal et implique que l'actionnement du second interrupteur entraine la commande des moyens occultant.

Enfin, tout récepteur de commande très basse tension de premier type 10A, connecté au troisième premier port d'entrée 5C, ne pourra commander que les éclairage principal et d'appoint via respectivement les premiers bus d'information 7A et 7B. Autrement dit, comme représenté sur la figure 2, le branchement d'un troisième récepteur de commande très basse tension de premier type 10A sur le troisième port d'entrée 5C implique que l'actionnement d'un premier interrupteur dudit récepteur entraine la commande de l'éclairage principal et implique que l'actionnement du second interrupteur entraine la commande de l'éclairage d'appoint.

Ainsi, au moment de la connexion d'un récepteur de commande très basse tension de premier type 10A sur un des ports d'entrée 5A, 5B, 5C de l'interface de commande 1, on constate un appairage associant une commande impulsionnelle de type ouvert-fermé à un ordre de commande très basse tension et à un ordre de commande de puissance d'un effecteur de puissance 100. Cet appairage est réalisé grâce et au moment du branchement électrique du premier port de connexion 15 dudit récepteur à un premier port d'entrée donné 5A, 5B, 5C. Pour un même récepteur de commande très basse tension de premier type 10A, l'appairage sera différent si le branchement est fait sur le premier port d'entrée référencé 5A ou s'il est fait sur le second port d'entrée référencé 5B.

A titre d'exemple d'activation du procédé selon l'invention, le scénario consisterait à générer un ordre de commande de puissance pour allumer les éclairages principal et d'appoint d'une pièce pour toute commande statique très basse puissance issue et véhiculée par un second bus interne d'information référencé sur le numéro 77A.

Toujours à titre d'exemple de programmation et d'activation du procédé, le scénario consisterait à générer un ordre de commande de puissance pour l'extinction des éclairages principal et d'appoint d'une pièce pour toute commande statique issue et véhiculée par un second bus interne d'information référencé sur le numéro 77B.

Comme représenté sur la figure 3, tout récepteur de commande de second type 10B connecté au second port d'entrée 55A, pourra commander l'ouverture ou la fermeture simultanées des éclairages principal et d'appoint via respectivement les seconds bus d'information 77A et 77B. Autrement dit, comme représenté sur la figure 3, le branchement d'un récepteur de commande très basse tension de second type 10B sur le second port d'entrée 55A implique que l'actionnement d'un premier interrupteur 160A dudit récepteur entraine l'allumage de tous les éclairages principal et d'appoint via la mise en court-circuit d'un second bus interne d'information référencé sur le numéro 77A et du bus commun interne 7D. En outre, cela implique que l'actionnement du second interrupteur 160B entraine la commande d'extinction de tous les éclairages principal et d'appoint via la mise en court-circuit d'un second bus interne d'information référencé sur le numéro 77B et du bus commun interne 7D.

Comme réprésenté sur le chronogramme de la figure 8, le premier envoi d'une commande statique par l'actionnement du premier interrupteur 160A du récepteur de commande très basse tension de second type 10B, entraine l'allumage simultané des éclairages principal et d'appoint via la mise en court-circuit d'un second bus interne d'information référencé sur le numéro 77A et du bus commun interne 7D. L'envoi ultérieur d'une première commande impulsionnelle par l'actionnement d'un interrupteur 16 du récepteur de commande très basse tension de premier type 10A, entraine l'extinction de l'éclairage principal via la mise en court-circuit d'un premier bus interne d'information référencé sur le numéro 7A et du bus commun interne 7D. L'envoi d'une seconde commande impulsionnelle par l'actionnement du même interrupteur 16, entraine l'allumage de l'éclairage principal via la mise en court-circuit d'un premier bus interne d'information référencé sur le numéro 7A et du bus commun interne 7D. L'éclairage d'appoint est resté allumé pendant toute la durée des actions.

Comme réprésenté sur le chronogramme de la figure 9, l'envoi d'une première commande impulsionnelle par l'actionnement d'un premier interrupteur 16 du récepteur de commande très basse tension de premier type 10A entraine l'allumage de l'éclairage principal. L'envoi d'une seconde commande impulsionnelle par l'actionnement d'un second interrupteur 16 du récepteur de commande très basse tension de premier type 10A entraine l'allumage de l'éclairage d'appoint. L'envoi ultérieur d'une commande statique par l'actionnement du second interrupteur 160B du récepteur de commande très basse tension de second type 10B, entraine l'extinction simultané des éclairages principal et d'appoint via la mise en court-circuit d'un second bus interne d'information référencé sur le numéro 77B et du bus commun interne 7D.

## Revendications

1. Ensemble de commande destiné à commander des effecteurs de puissance (100) et comportant au moins un récepteur de commande de premier type à très basse tension (10A) connectable à une interface de commande (1) via des moyens de communication très basse tension (11) de type BUS ;
- ledit au moins un récepteur de commande de premier type à très basse tension (10A) comprenant des moyens de commande (16) de type tout ou rien destinés à générer des commandes impulsionnelles ;
- ladite interface de commande (1) comprenant un bloc passif de transformation (2) relié à un bloc de contrôle actif (3) par des liaisons électriques très basse tension (4),
- ledit bloc passif comprenant:
- au moins un premier port d'entrée (5A, 5B, 5C) destiné à être relié au récepteur de commande de premier type à très basse tension (10A),
- au moins deux sorties (6) interconnectées avec ledit au moins premier port d'entrée (5A, 5B, 5C) et reliées au bloc de contrôle actif (3) via les liaisons électriques très basse tension (4),
- un bus interne commun (7D) reliant une première entrée de chaque premier port d'entrée (5A, 5B, 5C) à une sortie (6) commune du bloc passif de transformation (2),
- au moins un premier bus interne d'information (7A, 7B, 7C) reliant une seconde entrée de chaque premier port d'entrée (5A, 5B, 5C) à une sortie (6) dédiée du bloc passif de transformation (2), toutes les entrées des premiers ports d'entrée (5A, 5B, 5C) destinées à une même commande étant reliés à un même premier bus interne d'information (7A, 7B, 7C)
une commande implusionnelle mettant en court-circuit le bus interne commun (7D) et un bus interne d'information (7A, 7B, 7C) ;
- ledit bloc de contrôle actif (3) comprenant des moyens de traitement destinés à transformer des ordres de commande reçus via les liaisons électriques très basse tension (4) en ordre de commande de puissance pour commander de manière dédiée au moins un effecteur de puissance (100), la transformation des ordres de commande très basse tension en ordre de commande de puissance étant réalisée en fonction de scénarios programmés dans ledit bloc,
**caractérisé en ce qu'**il comporte au moins un récepteur de commande de second type à très basse tension (10B) connectable à l'interface de commande (1) via des moyens de communication très basse tension (11) de type BUS et comportant des moyens de commande (160, 160A, 160B) de type tout ou rien destinés à générer des commandes statiques,
le bloc passif de transformation (2) comprenant :
- au moins un second port d'entrée (55A) destiné à être relié au récepteur de commande de second type à très basse tension (10B),
- au moins deux sorties (6) interconnectées avec ledit au moins second port d'entrée (55A) et reliées au bloc de contrôle actif (3) via une liaison électrique très basse tension (4),
- au moins un second bus interne d'information (77A, 77B) reliant une entrée de chaque second port d'entrée (55A) à une sortie (6) dédiée du bloc passif de transformation (2), toutes les entrées des seconds ports d'entrée (55A) destinées à une même commande étant reliés à un même bus interne d'information (77A, 77B) ;
le bus interne commun (7D) reliant une entrée de tous les ports d'entrée (5A, 5B, 5C, 55A) à une sortie (6) commune du bloc passif de transformation (2), une commande statique mettant en court-circuit le bus interne commun (7D) et au moins un second bus interne d'information (77A, 77B).

2. Ensemble de commande selon la revendication 1, **caractérisée en ce que** des moyens de traitement du bloc de contrôle actif (3) transforment des ordres de commande très basse tension émis respectivement par les récepteur de commande de premier et de second type (10A, 108) suivant un ordre chronologique.

3. Ensemble de commande selon la revendication 1, **caractérisée en ce que** les ports d'entrée (5A, 5B, 5C, 55A) du bloc passif de transformation (2) comportent des moyens de connexion destinés à être reliés à un récepteur de commande de premier ou de second type (10A, 10B) via des moyens de communication très basse tension (11) de type BUS.

4. Ensemble de commande selon l'une quelconque des revendications précédentes, **caractérisé en ce que** les moyens de commande (16) du récepteur de commande de premier type à très basse tension (10A) comportent au moins un interrupteur à deux positions destiné à générer une commande impulsionnelle de type ouvert-fermé.

5. Ensemble de commande selon l'une quelconque des revendications précédentes, **caractérisé en ce que** le récepteur de commande de second type à très basse tension (10B) comporte une base et une organe de commande nomade destiné à collaborer avec ladite base ;
- la base comportant au moins un dipole électrique de commande étant naturellement en position ouverte, un premier pôle étant destiné à être connecté au bus interne commun (7D) et un second pôle étant destiné à être connecté à un second bus interne d'information (77A, 77B) ;
- l'organe de commande nomade (30) étant apte à agir sur la fermeture du dipole électrique de commande lorsque la base (40) et l'organde commande nomade (30) sont placés dans une zone d'influence commune.

6. Ensemble de commande selon la revendication 5, **caractérisé en ce que** l'organe de commande nomade (30) comportent des moyens de fermeture (31) autorisant une fermeture du dipole électrique par contact direct entre lesdits moyens et lesdits premiers et second pôles.

7. Ensemble de commande selon la revendication 5, **caractérisé en ce que** la base (40) comporte un contact mobile (43) apte à se déplacer entre une position d'ouverture et une position de fermeture du dipôle électrique, le contact entre l'organe de commade nomade (30) et la base (40) entrainant le déplacement du contact mobile (43) de la position d'ouverture vers la position de fermeture.

8. Ensemble de commande selon la revendication 7, **caractérisé en ce que** le récepteur de commande de second type à très basse tension (10B) comporte des moyens magnétiques d'actionnement (44) comportant au moins un aimant (33) positionné dans l'organe de commande nomade (30), la présence dudit organe dans le zone d'influence de la base (40) entrainant le déplacement du contact mobile (43) de la position d'ouverture à la position de fermeture sous l'effet du champ magnétique de l'aimant (33).

9. Ensemble de commande selon la revendication 8, **caractérisé en ce que** les moyens magnétiques d'actionnement (44) comportent un interrupteur de type ampoule REED ou de type MEMS.

10. Ensemble de commande selon l'une quelconque des revendications 5 à 9, **caractérisé en ce que** la base (40) du récepteur de commande de second type à très basse tension (10B) comporte des premiers moyens de connexion (155) destinés à être reliés au second port d'entrée (55A, 55B, 55C) d'un bloc passif de transformation (2) via des moyens de communication très basse tension (11) de type BUS.

11. Ensemble de commande selon l'une quelconque des revendications 5 à 10, **caractérisé en ce que** la base (40) du récepteur de commande de second type à très basse tension (10B) comporte des seconds moyens de connexion (177) reliés au premiers moyens de connexion (155) et étant destinés au branchement série ou parallèle d'au moins une seconde base d'un second récepteur de second type (10B).

12. Ensemble de commande selon l'une quelconque des revendications 8 à 14, **caractérisé en ce que** la base (40) du récepteur de commande de second type à très basse tension (10B) comporte au moins deux dipoles électriques de commande (160A, 160B).

13. Ensemble de commande selon la revendication 12, **caractérisé en ce que** l'organe de commande nomade (30) comporte des moyens de fermeture simultanée desdits au moins deux dipoles électriques de commande.

14. Ensemble de commande selon l'une quelconque des revendications 5 à 13, **caractérisé en ce que** l'organe de commande nomade (30) comporte un boitier ayant plusieurs de faces de contrôle, chaque face de contrôle étant adaptée à coopérer avec la base et comportant ses propres moyens moyens de fermeture.

15. Procédé de commande d'effecteur de puissance mettant en oeuvre ledit ensemble de commande (1) d'effecteurs selon les revendications 1 à 14, **caractérisé en ce qu'**il consiste à transformer des ordres de commande très basse tension en ordre de commande de puissance en fonction de scénarios programmés dans ledit bloc, procédé **caractérisé en ce qu'**il consiste à traiter les ordres de commande très basse tension issue de récepteur de commande de premier type (10A) et de récepteur de commande de second type (10B) suivant un ordre chronologique, le dernier ordre arrivé annulant et remplaçant le précédent ordre quel que soit le récepteur concerné par l'envoi.

## Patentansprüche

1. Steuereinrichtung zur Steuerung von Leistungsverbrauchern (100), umfassend mindestens einen Kleinspannungs-Steuerempfänger eines ersten Typs (10A), der über Kleinspannungs-Kommunikationsmittel (11) vom Typ BUS an eine Steuerschnittstelle (1) angeschlossen werden kann,
- wobei der mindestens einfach vorhandene Kleinspannungs-Steuerempfänger des ersten Typs (10A) Binär-Steuermittel zur Erzeugung von Impulsteuerbefehlen umfasst,
- und die genannte Steuerschnittstelle (1) einen passiven Umformblock (2) umfasst, der über elektrische Kleinspannungsverbindungen (4) mit einem aktiven Steuerblock (3) verbunden ist,
- welcher passive Umformblock
- mindestens einen ersten Eingangsport (5A, 5B, 5C), der dazu dient, mit dem Kleinspannungs-Steuerempfänger des ersten Typs (10A) verbunden zu werden,
- mindestens zwei Ausgänge (6), die mit dem mindestens einfach vorhandenen ersten Eingangsport (5A, 5B, 5C) verbunden und über die elektrischen Kleinspannungsverbindungen (4) an den aktiven Steuerblock (3) angeschlossen sind,
- einen gemeinsamen internen Bus (7D), der einen ersten Eingang jedes ersten Eingangsports (5A, 5B, 5C) mit einem gemeinsamen Ausgang (6) des passiven Umformblocks (2) verbindet,
- und mindestens einen ersten internen Datenbus (7A, 7B, 7C) umfasst, der einen zweiten Eingang jedes ersten Eingangsports (5A, 5B, 5C) mit einem dedizierten Ausgang (6) des passiven Umformerblocks (2) verbindet, wobei alle dem gleichen Steuerbefehl zugeordneten Eingänge der ersten Eingangsports (5A, 5B, 5C) an den gleichen internen Datenbus (7A, 7B, 7C) angeschlossen sind,
wobei ein Impulssteuerbefehl den gemeinsamen internen Bus (7D) und einen internen Datenbus (7A, 7B, 7C) kurzschließt,
- welcher aktive Steuerblock (3) Verarbeitungsmittel umfasst, die dazu dienen, über die Kleinspannungs-Verbindungen (4) erhaltene Steuerbefehle in Leistungs-Steuerbefehle zur dedizierten Ansteuerung mindestens eines Leistungsverbrauchers (100) umzuformen, wobei die Umformung der Kleinspannungs-Steuerbefehle in Leistungs-Steuerbefehle in Abhängigkeit von einem im genannten Block hinterlegten Programm erfolgt,
**dadurch gekennzeichnet, dass** die Steuereinrichtung mindestens einen Kleinspannungs-Steuerempfänger eines zweiten Typs (10B) umfasst, der über Kleinspannungs-Kommunikationsmittel (11) vom Typ BUS an die Steuerschnittstelle (1) angeschlossen werden kann und Binär-Steuermittel (160, 160A, 160B) zur Erzeugung von statischen Steuerbefehlen umfasst,
wobei der passive Umformblock (2):
- mindestens einen zweiten Eingangsport (55A, der dazu dient, mit dem Kleinspannungs-Steuerempfänger des zweiten Typs (10B) verbunden zu werden,
- mindestens zwei Ausgänge (6), die mit dem genannten, mindestens einfach vorhandenen zweiten Eingangsport (55A) und über eine elektrische Kleinspannungsverbindung (4) mit dem aktiven Steuerblock (3) verbunden sind,
- und mindestens einen zweiten internen Datenbus (77A, 77B) umfasst, der einen Eingang jedes zweiten Eingangsports (55A) mit einem dedizierten Ausgang (6) des passiven Umformblocks (2) verbindet, wobei alle dem gleichen Steuerbefehl zugeordneten Eingänge der zweiten Eingangsports (55A) an den gleichen internen Datenbus (77A, 77B) angeschlossen sind, wobei der interne Datenbus (7D) einen Eingang aller Eingangsports (5A, 5B, 5C, 55A) mit einem gemeinsamen Ausgang (6) des passiven Umformblocks (2) verbindet und ein statischer Steuerbefehl den gemeinsamen internen Bus (7D) und mindestens einen zweiten internen Datenbus (77A, 77B) kurzschließt.

2. Steuereinrichtung nach Anspruch 1, **dadurch gekennzeichnet dass** Verarbeitungsmittel des aktiven Steuerblocks (3) von den Steuerempfängern des ersten bzw. des zweiten Typs (10A, 10B) gelieferte Kleinspannungs-Steuerbefehle in chronologischer Abfolge umformen.

3. Steuereinrichtung nach Anspruch 1, **dadurch gekennzeichnet, dass** die Eingangsports (5A, 5B, 5C, 55A) des passiven Umformblocks (2) Verbindungsmittel umfassen, die dazu dienen, über Kleinspannungs-Kommunikationsmittel (11) vom Typ BUS mit einem Kleinspannungs-Steuerempfänger eines ersten oder zweiten Typs (10A, 10B) verbunden zu werden.

4. Steuereinrichtung nach irgendeinem der vorhergehenden Ansprüche, **dadurch gekennzeichnet, dass** die Steuermittel (16) des Kleinspannungs-Steuerempfängers des ersten Typs (10A) mindestens einen Schalter mit zwei Stellungen umfasst, der dazu dient, einen Impulssteuerbefehl vom Typ Ein/Aus zu erzeugen.

5. Steuereinrichtung nach irgendeinem der vorhergehenden Ansprüche, **dadurch gekennzeichnet, dass** der Kleinspannungs-Steuerempfänger des zweiten Typs (10B) eine Basiseinheit und ein Fernbetätigungs-Steuerorgan umfasst, das dazu dient, mit der genannten Basiseinheit zusammenzuwirken, wobei
- die Basiseinheit mindestens einen als Schließer ausgebildeten Zweipol-Steuerkontakt mit einem ersten Pol zum Anschluss an den gemeinsamen internen Bus (7D) und einem zweiten Pol zum Anschluss an einen zweiten internen Datenbus (77A, 77B) umfasst,
- und das Fernbetätigungs-Steuerorgan (30) dazu ausgelegt ist, das Schließen des elektrischen Zweipol-Steuerkontakts zu bewirken, wenn die Basiseinheit (40) und das Fernbetätigungs-Steuerorgan (30) in einem gemeinsamen Wirkbereich angeordnet sind.

6. Steuereinrichtung nach Anspruch 5, **dadurch gekennzeichnet, dass** das Fernbetätigungs-Steuerorgan (30) Schließmittel (31) umfasst, die ein Schließen des elektrischen Zweipolkontakts durch direkte Kontaktgabe zwischen den genannten Schließmitteln und dem genannten ersten bzw. zweiten Pol ermöglichen.

7. Steuereinrichtung nach Anspruch 5, **dadurch gekennzeichnet, dass** die Basiseinheit (40) einen beweglichen Kontakt (43) umfasst, der dazu ausgelegt ist, zwischen einer Ausschaltstellung und einer Einschaltstellung des elektrischen Zweipolkontakts (30) verschoben zu werden, wobei die Kontaktgabe zwischen dem Fernbetätigungs-Steuerorgan (30) und der Basiseinheit (40) die Verschiebung des beweglichen Kontakts (43) von der Ausschaltstellung in die Einschaltstellung bewirkt.

8. Steuereinrichtung nach Anspruch 7, **dadurch gekennzeichnet, dass** der Kleinspannungs-Steuerempfänger des zweiten Typs (10B) magnetische Betätigungsmittel (44) mit mindestens einem im Fernbetätigungs-Steuerorgan (30) angeordneten Magneten (33) umfasst, wobei die Platzierung des genannten Steuerorgans im Wirkbereich der Basiseinheit (40) durch Einwirkung des Magnetfeldes des Magneten (33) die Verschiebung des beweglichen Kontakts (43) von der Ausschaltstellung in die Einschaltstellung (33) bewirkt.

9. Steuereinrichtung nach Anspruch 8, **dadurch gekennzeichnet, dass** die magnetischen Betätigungsmittel (44) einen Schalter vom Typ REED- oder MEMS-Schalter umfassen.

10. Steuereinrichtung nach irgendeinem der Ansprüche 5 bis 9, **dadurch gekennzeichnet, dass** die Basiseinheit (40) des Kleinspannungs-Steuerempfängers des zweiten Typs (10B) erste Verbindungsmittel (155) umfasst, die dazu dienen, über Kleinspannungs-Kommunikationsmittel (11) vom Typ BUS mit dem zweiten Eingangsport (55A, 55B, 55C) eines passiven Umformblocks (2) verbunden zu werden.

11. Steuereinrichtung nach irgendeinem der Ansprüche 5 bis 10, **dadurch gekennzeichnet, dass** die Basiseinheit (40) des Kleinspannungs-Steuerempfängers des zweiten Typs (10B) mit den ersten Verbindungsmitteln (155) verbundene zweite Verbindungsmittel (177) umfasst, die zum seriellen oder parallelen Anschluss mindestens einer zweiten Basiseinheit eines zweiten Steuerempfängers des zweiten Typs (10B) dienen.

12. Steuereinrichtung nach irgendeinem der Ansprüche 8 bis 14, **dadurch gekennzeichnet, dass** die Basiseinheit (40) des Kleinspannungs-Steuerempfängers des zweiten Typs (10B) mindestens zwei elektrische Zweipol-Steuerkontakte (160A, 160B) umfasst.

13. Steuereinrichtung nach Anspruch 12, **dadurch gekennzeichnet, dass** das Fernbetätigungs-Steuerorgan (30) Schließmittel zum gleichzeitigen Schließen der genannten, mindestens zweifach vorhandenen elektrischen Zweipol-Steuerkontakte umfasst.

14. Steuereinrichtung nach irgendeinem der Ansprüche 5 bis 13, **dadurch gekennzeichnet, dass** das Fernbetätigungs-Steuerorgan (30) ein Gehäuse mit mehreren Steuerflächen umfasst, wobei jede Steuerungsfläche dazu ausgelegt ist, mit der Basiseinheit zusammenzuwirken, und eigene Schließmittel umfasst.

15. Verfahren zur Steuerung von Leistungsverbrauchern unter Verwendung der genannten Einrichtung zur Steuerung von elektrischen Verbrauchern (1) nach Anspruch 1 bis 14, **dadurch gekennzeichnet, dass** es darin besteht, Kleinspannungs-Steuersignale in Abhängigkeit von einem im genannten Block hinterlegten Programm in Leistungs-Steuersignale umzuformen und **dadurch gekennzeichnet, dass** das Verfahren darin besteht, die von Steuerempfängern eines ersten Typs (10A) und von Steuerempfängern eines zweiten Typs (10B) gelieferten Kleinspannungs-Steuerbefehle in chronologischer Abfolge zu verarbeiten, wobei der letzte eingehende Befehl unabhängig vom jeweils aussendenden Empfänger den vorherigen Befehl löscht und ersetzt.

## Claims

1. A control assembly designed to command power effectors (100) and comprising at least one very low-voltage command receiver of first type (10A) connectable to a control interface (1) via very low-voltage communication means (11) of BUS type;
- said at least one very low-voltage command receiver of first type (10A) comprising command means (16) of binary type designed to generate pulsed commands;
- said control interface (1) comprising a passive transformation unit (2) connected to an active control unit (3) by very low-voltage electric connections (4),
- said passive unit comprising:
- at least a first input port (5A, 5B, 5C) designed to be connected to the very low-voltage command receiver of first type (10A),
- at least two outputs (6) interconnected with said at least first input port (5A, 5B, 5C) and connected to the active control unit (3) via the very low-voltage electric connections (4),
- a common internal bus (7D) connecting a first input of each first input port (5A, 5B, 5C) to a common output (6) of the passive transformation unit (2),
- at least a first internal information bus (7A, 7B, 7C) connecting a second input of each first input port (5A, 5B, 5C) to a dedicated output (6) of the passive transformation unit (2), all the inputs of the first input ports (5A, 5B, 5C) designed for the same command being connected to the same internal information bus (7A, 7B, 7C)
a pulsed command short-circuiting the common internal bus (7D) and an internal information bus (7A, 7B, 7C);
- said active control unit (3) comprising processing means designed to transform command orders received via the very low-voltage electric connections (4) into power command orders to command at least one power effector (100) in dedicated manner, transformation of the very low-voltage command orders into power command orders being performed according to scenarios programmed in said unit,
**characterized in that** it comprises at least one very low-voltage command receiver of second type (10B) connectable to the control interface (1) via very low-voltage communication means (11) of BUS type and comprising command means (160, 160A, 160B) of binary type designed to generate static commands,
the passive transformation unit (2) comprising:
- at least a second input port (55A) designed to be connected to the very low-voltage command receiver of second type (10B),
- at least two outputs (6) interconnected with said at least second input port (55A) and connected to the active control unit (3) via a very low-voltage electric connection (4),
- at least a second internal information bus (77A, 77B) connecting an input of each second input port (55A) to a dedicated output (6) of the passive transformation unit (2), all the inputs of the second input ports (55A) designed for the same command being connected to the same internal information bus (77A, 77B);
the common internal bus (7D) connecting an input of all the input ports (5A, 5B, 5C, 55A) to a common output (6) of the passive transformation unit (2), a static command short-circuiting the common internal bus (7D) and at least a second internal information bus (77A, 77B).

2. The control assembly according to claim 1, **characterized in that** the processing means of the active control unit (3) transform very low-voltage command orders respectively transmitted by the command receiver of first and second type (10A, 10B) in chronological order.

3. The control assembly according to claim 1, **characterized in that** the input ports (5A, 5B, 5C, 55A) of the passive transformation unit (2) comprise connection means designed to be connected to a command receiver of first or second type (10A, 10B) via very low-voltage communication means (11) of BUS type.

4. The control assembly according to any one of the foregoing claims, **characterized in that** the command means (16) of the very low-voltage command receiver of first type (10A) comprise at least one two-position switch designed to generate a pulsed command of open-closed type.

5. The control assembly according to any one of the foregoing claims, **characterized in that** the very low-voltage command receiver of second type (10B) comprises a base and a mobile control device designed to collaborate with said base;
- the base comprising at least one electric control dipole being naturally in the open position, a first pole being designed to be connected to the common internal bus (7D) and a second pole being designed to be connected to a second internal information bus (77A, 77B);
- the mobile control device (30) being able to act on closing of the electric control dipole when the base (40) and the mobile control device (30) are placed in a common area of influence.

6. The control assembly according to claim 5, **characterized in that** the mobile control device (30) comprises closing means (31) enabling closing of the electric dipole by direct contact between said means and said first and second poles.

7. The control assembly according to claim 5, **characterized in that** the base (40) comprises a movable contact (43) able to move between an open position and a closed position of the electric dipole, contact between the mobile control device (30) and the base (40) resulting in movement of the movable contact (43) from the open position to the closed position.

8. The control assembly according to claim 7, **characterized in that** the very low-voltage command receiver of second type (10B) comprises magnetic actuating means (44) comprising at least one magnet (33) positioned in the mobile control device (30), the presence of said device in the area of influence of the base (40) resulting in movement of the movable contact (43) from the open position to the closed position due to the effect of the magnetic field of the magnet (33).

9. The control assembly according to claim 5, **characterized in that** the magnetic actuating means (44) comprise a switch of REED cartridge type or of MEMS type.

10. The control assembly according to any one of claims 5 to 9, **characterized in that** the base (40) of the very low-voltage command receiver of second type (10B) comprises first connection means (155) designed to be connected to the second input port (55A, 55B, 55C) of a passive transformation unit (2) via very low-voltage communication means (11) of BUS type.

11. The control assembly according to any one of claims 5 to 10, **characterized in that** the base (40) of the very low-voltage command receiver of second type (10B) comprises second connection means (177) connected to the first connection means (155) and designed for series or parallel connection of at least a second base of a second receiver of second type (10B).

12. The control assembly according to any one of claims 8 to 14, **characterized in that** the base (40) of the very low-voltage command receiver of second type (10B) comprises at least two electric control dipoles (160A, 160B).

13. The control assembly according to claim 12, **characterized in that** the mobile control device (30) comprises means for simultaneous closing of said at least two electric control dipoles.

14. The control assembly according to any one of claims 5 to 13, **characterized in that** the mobile control device (30) comprises a case having several control faces, each control face being designed to collaborate with the base and comprising its own closing means.

15. A method for control of a power effector implementing said control effector assembly (1) according to claims 1 to 14, **characterized in that** it consists in transforming very low-voltage command orders into power command orders according to scenarios programmed in said unit, a method **characterized in that** it consists in processing the very low-voltage command orders provided by the command receiver of first type (10A) and the command receiver of second type (10B) in chronological order, the last order arriving cancelling and replacing the previous order whatever the receiver concerned by the transmission.
